# FASCICULE DE BREVET EUROPEEN

(11) **EP 2 816 687 B1**
(45) Date de publication et mention de la délivrance du brevet: **19.08.2015**
(21) Numéro de dépôt: 13193879.7
(22) Date de dépôt: 21.11.2013
(51) Int. Cl.: H02G 3/04, H02G 3/06

(54) **Tronçon de chemin de câbles à encliquetage transversal, chemin de cables comprenant de tels troncons et procédé de fabrication**
Kabelpritschenabschnitt mit quer verlaufenden Einrastvorrichtungen, Kabelpritsche, die solche Abschnitte umfasst, und Herstellungsverfahren
Cable-tray section with transverse locking, cable tray comprising such sections and method for manufacturing same

(30) Priorité: 20.06.2013 FR 1355868
(43) Date de publication de la demande: 24.12.2014
(73) Titulaire: Niedax France, 62400 Bethune (FR)
(72) Inventeur: Duchene, Marc, 62400 Bethune (FR); Penichon, Mickaël, 62400 Bethune (FR)
(74) Mandataire: Demulsant, Xavier

(56) Documents cités:
- EP-A1- 1 505 702
- EP-A1- 2 276 129
- WO-A1-2013/007855
- ES-U- 1 076 189

## Description

L'invention a trait au domaine des chemins de câbles, et plus particulièrement à l'assemblage de tronçons de chemins de câbles.

Les chemins de câbles permettent le support de câbles sur de grandes hauteurs (en configuration verticale) ou de grandes longueurs (en configuration horizontale), notamment de câbles électriques, câbles téléphoniques, câbles de fibre optique, ou encore de câbles de réseau informatique.

Les chemins de câbles sont formés de tronçons généralement réalisés en métal, notamment en acier, acier inoxydable, ou le cas échéant en matière plastique ou composite.

Depuis de nombreuses années, et sans qu'il existe de règles internationales ou européennes en la matière, la dimension longitudinale des tronçons de chemins de câbles est de trois mètres, en général, ainsi qu'il est rappelé page 2 lignes 12 et 13 du document FR2737355.

A partir de ces tronçons, on constitue les réseaux de chemins de câbles que l'on souhaite.

Pour ce faire, on positionne bout à bout les tronçons de chemins de câbles et on immobilise conventionnellement ces tronçons à l'aide de pièces de jonction, typiquement des éclisses, des plaquettes plates, éventuellement articulées, ou bien encore à l'aide de cornières.

Les tronçons sont également fixés, de place en place, sur des consoles ou des pendards, ou bien encore suspendus, la distance entre les supports étant typiquement de l'ordre d'un mètre cinquante.

On distingue deux types de tronçons de chemins de câbles, à savoir les tronçons en tôle (perforée ou non) et les tronçons en treillis de fil. L'invention vise plus particulièrement les chemins de câbles comprenant des tronçons en treillis de fil ou des parties extrêmes en treillis de fil.

Les tronçons en treillis de fil comprennent des fils longitudinaux, appelés fils de chaîne, et des fils transversaux, appelés fils de trame, croisés aux fils de chaîne, conférant conventionnellement au treillis une section en U.

Les tronçons peuvent subir un traitement ultérieur, en fonction de l'environnement dans lequel ils sont destinés à être placés. Ainsi les tronçons métalliques peuvent subir une galvanisation, être plastifiés ou encore revêtus d'une couche de résine époxy.

Les fabricants de chemins de câbles ont développé, depuis de nombreuses années, de très nombreuses solutions techniques visant à faciliter la jonction par éclissage des tronçons de chemins de câbles, tant pour ce qui est du nombre d'outils et de pièces que du temps de montage des éclisses sur les tronçons.

La diversité des solutions techniques illustre bien l'importance accordée par les fabricants à ces éclisses.

On distingue quatre grands types de mise en place des éclisses pour les chemins de câbles en treillis de fils:
- montage de l'éclisse ou de la pièce de jonction par boulonnage, ainsi que présenté dans les documents EP0298825, EP0399790, EP0617493;
- montage de l'éclisse par soudage, ainsi que présenté dans les documents EP0571307, WO2013007855;
- montage de l'éclisse à force ou par encliquetage, ainsi que présenté dans les documents FR2208219, US5384937, US6193434, FR2879036;
- montage d'éclisses coulissantes, ainsi que présenté dans les documents EP822364, EP1193821.

La fabrication puis le montage des éclisses ou des pièces de jonction sur les treillis de fils engendrent des coûts importants.

Le montage des éclisses sur chaque tronçon de chemins de câbles, sur chantier, nécessite un outillage et prend du temps.

De plus, sur le chantier, le monteur peut ne pas avoir un accès aisé aux deux ailes de chaque tronçon de chemins de câbles sur lesquelles doivent être montées les éclisses.

Pour tenter de palier ces inconvénients, il a été proposé de modifier la configuration des parties extrêmes de tronçons de chemins de câbles en treillis de fils de sorte à permettre leur jonction sans employer de pièce rapportée, comme illustré dans les documents FR2966987, DE19946388, EP973238, EP1511142, FR2971110. Les tronçons de chemins de câbles décrits dans ces documents antérieurs s'avèrent de fabrication complexe et onéreuse.

Il est connu du document ES1076189 BASOR, un chemin de câbles en treillis de fil à section transversale en U, pourvu à une première extrémité d'un dispositif d'union, le dispositif d'union se présentant sous la forme d'une pince apte à coopérer avec une deuxième extrémité d'un tronçon similaire, les pinces faisant saillie à l'extérieur du tronçon.

Le chemin de câbles décrit dans le document ES 1076189 présente de nombreux inconvénients :
- l'assemblage de deux tronçons doit être effectué dans la direction longitudinale. Lorsque le montage doit être réalisé dans un espace restreint en longueur, le montage devient impossible ;
- les tronçons ont conventionnellement une longueur de trois mètres et le déplacement manuel de tels tronçons dans leur direction longitudinale s'avère laborieux ;
- les tronçons comprennent un doublement de fil de trame à leurs extrémités, augmentant les coûts et temps de fabrication ;
- les pinces font saillie du tronçon sur une longueur importante afin de pouvoir coopérer avec les deux fils de trame d'extrémité d'un tronçon adjacent. Il en résulte que les extrémités des tronçons peuvent être détériorées lors du transport, de la manipulation ou du stockage des tronçons.

La solution proposée ci-après a pour objet de pallier les inconvénients de l'art antérieur.

Un premier objectif est de proposer un tronçon de chemin de câbles simple de fabrication.

Un deuxième objectif est de proposer un tronçon de chemin de câbles permettant un assemblage aisé avec un tronçon adjacent.

Un troisième objectif est de proposer un tronçon de chemin de câbles proposant de bonnes caractéristiques de tenue mécanique lors d'un assemblage avec un tronçon adjacent.

Il est proposé, en premier lieu, un tronçon de chemin de câbles comprenant:
- un treillis de fil formé par assemblage de fils de chaîne longitudinaux et de fils de trame transversaux définissant un fond et deux ailes ;
- des pièces d'assemblage latérales rapportées sur les ailes du tronçon, ces pièces d'assemblage comprenant une boucle et deux bras sensiblement perpendiculaires à la boucle, à savoir un bras supérieur et un bras inférieur ;
- la pièce d'assemblage comprenant un crochet définissant une concavité tournée vers l'extérieur du tronçon, ce crochet étant placé dans le prolongement du bras supérieur;
- la boucle s'étendant obliquement par rapport à l'aile de sorte à permettre un encliquetage transversal du tronçon sur un tronçon adjacent.

Le tronçon présente les caractères suivants, le cas échéant combinés :
- la concavité est sensiblement circulaire et son rayon intérieur est sensiblement égal au rayon des fils de trame du tronçon ;
- le crochet est tangent à un fil de trame d'extrémité du tronçon ;
- les pièces d'assemblage sont soudées sur deux fils de trame du tronçon par leurs bras ;
- les pièces d'assemblage rapportées sont formées par pliage d'un fil.

Il est proposé en deuxième lieu, un chemin de câbles réalisé par assemblage d'au moins deux tronçons tels que présentés ci-dessus.

Il est proposé en troisième lieu, une nappe en treillis de fil formé par assemblage de fils de chaîne longitudinaux et de fils de trame transversaux, la nappe comprenant des pièces en U pourvues d'une boucle et de deux bras, distincts des fils de la nappe, parallèles aux fils de chaîne et faisant partiellement saillie de la nappe.

Il est en outre proposé une nappe en treillis de fil formé par assemblage de fils de chaîne longitudinaux et de fils de trame transversaux, la nappe comprenant des pièces d'assemblage latérales comprenant une boule et deux bras sensiblement perpendiculaires à la base, à savoir un bras supérieur portant un crochet définissant une concavité au niveau des fils de trame, et un bras inférieur portant un décroché au niveau du crochet du bras supérieur, la boucle s'étendant obliquement par rapport à la nappe en treillis de fil.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective de dessus d'un tronçon de chemin de câbles ;
- la figure 2 est une vue en perspective de dessus d'une étape d'assemblage de deux tronçons ;
- la figure 3 est une vue en perspective de dessus de la zone de jonction de deux tronçons assemblés ;
- la figure 4 est une vue en coupe selon le plan IV-IV de la figure 3, la configuration assemblée étant montrée en pointillés ;
- la figure 5 est une vue de détail en coupe transversale de l'aile de deux tronçons assemblés ;
- la figure 6 est une vue de détail de dessus de l'aile de deux tronçons assemblés ;

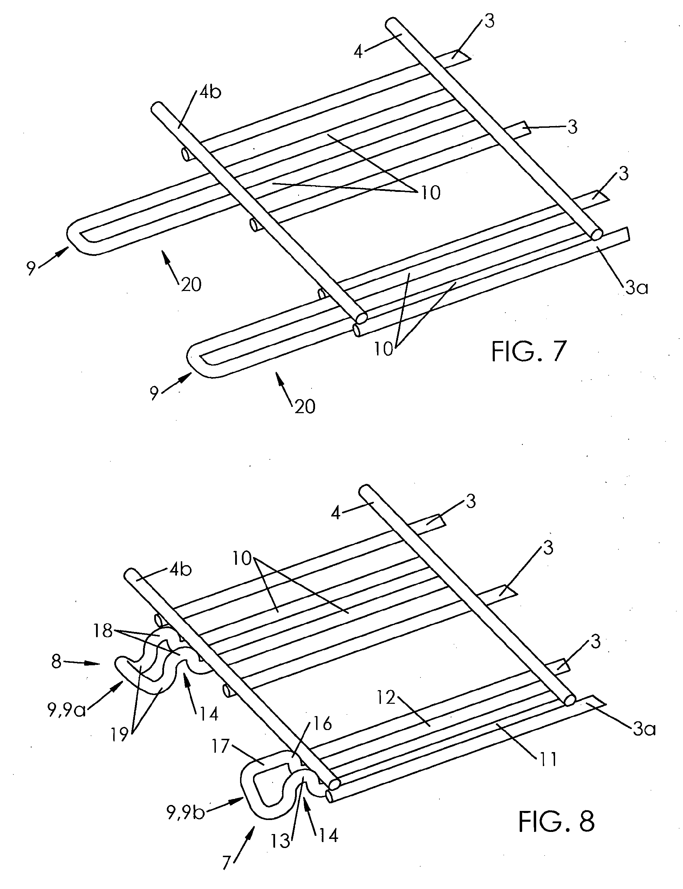

- la figure 7 est une vue en perspective de dessus d'une partie d'un panneau en treillis de fil dans une étape de fabrication de tronçons de chemins de câbles ;
- la figure 8 est une vue en perspective de dessus d'une partie d'un panneau en treillis de fil dans une autre étape de fabrication des tronçons de chemins de câbles.

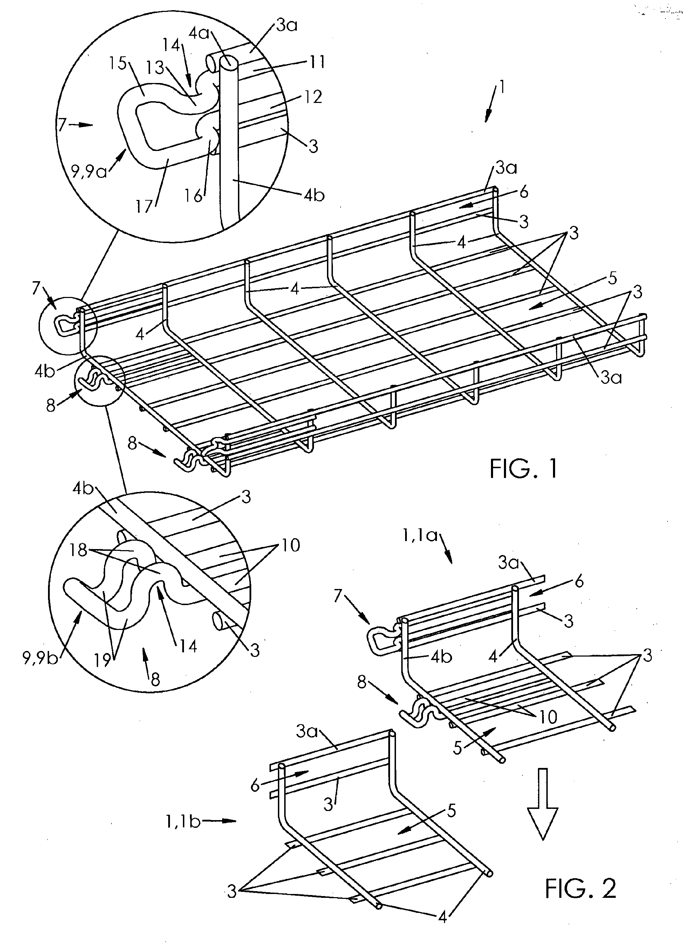

La figure 1 représente, en perspective, un tronçon 1 de chemin de câbles 2 en treillis de fil à section transversale en U, formé par assemblage de fils de chaîne 3 longitudinaux et de fils de trame 4 transversaux définissant un fond 5 et deux ailes 6 latérales.

Dans les modes de réalisation représentés, les fils de chaîne 3 et les fils de trame 4 sont de section identique. En variante, les fils de chaîne et/ou les fils de trame sont de section adaptée aux charges prévues pour chaque partie du tronçon.

Les ailes 6 s'étendent de part et d'autre du fond 5 sensiblement perpendiculairement par rapport à celui-ci.

En variante de réalisation, non représentée, les ailes du chemin de câbles ne sont pas perpendiculaires au fond, le tronçon présentant une section évasée de sorte à permettre l'empilement des tronçons les uns dans les autres. Le tronçon peut présenter une section en V à fond plat, comme connu en soi et décrit par exemple dans les documents WO2013041741, EP818862, WO2006076746, US2002030143.

Les fils de chaîne 3 sont montés soudés sur l'extérieur des fils de trame 4. Chaque aile 6 porte un fil de chaîne supérieur, dénommé fil de rive 3a, les extrémités 4a des fils de trame 4 étant émoussés, lisses ou biseautés de sorte à ne pas former de partie coupante au-delà du fil de rive 3a.

Dans le mode de réalisation représenté sur la figure 1, six fils de chaîne 3 tapissent le fond 5 de chaque tronçon 1 et chaque aile 6 latérale comprend deux fils de chaîne 3, dont le fil de rive 3a.

Chaque tronçon 1 comprend une partie extrême mâle pourvue de pièces d'assemblage 7, 8.

Dans le mode de réalisation représenté, une pièce d'assemblage 7 est placée sur chaque aile 6 et deux pièces d'assemblage 8 sont disposées sur le fond 5 de chaque tronçon 1. Le nombre de pièces d'assemblage 7, 8 est adaptée aux dimensions du tronçon.

Ces pièces d'assemblage 7, 8 sont formées d'un fil replié sur lui-même, formant une partie saillante au-delà du fil de trame d'extrémité 4b. Le fil employé pour la réalisation des pièces d'assemblage 7, 8 est avantageusement le même que celui employé pour les fils de chaîne et/ou les fils de trame.

Dans le mode de réalisation représenté en figure 1, les pièces d'assemblage 7, 8 sont fixés, par exemple par soudage, sur l'extérieur des fils de trame 4.

Plus précisément, les pièces d'assemblage 7, 8 sont fixés sur deux fils de trame contigus, à savoir le fil de trame d'extrémité 4b et le fil de trame 4 immédiatement voisin de ce fil de trame d'extrémité 4b. En variante de réalisation, non représentée, les pièces d'assemblage 7, 8 sont fixés sur plus de deux fils de trame.

Le pas entre les fils de trame 4 est constant dans le tronçon 1 pour le mode de réalisation représenté. En variante de réalisation, non représentée, la partie extrême mâle du tronçon comporte une densité de fil de trame différente du reste du tronçon.

Les pièces 7, 8 d'assemblage comprennent une boucle 9 saillant au-delà du fil de trame d'extrémité 4a et deux bras 10 longitudinaux s'étendant depuis la boucle 9.

Les pièces 7, 8 d'assemblage sont fixées, par exemple soudées, sur l'extérieur du tronçon 1.

Les pièces d'assemblage 7 portées par les ailes 6 comportent une boucle 9a différente de la boucle 9b des pièces d'assemblage 8 fixées sur le fond 5 des tronçons 1.

L'on décrit tout d'abord les pièces d'assemblage 7 portées par les ailes.

Une pièce 7 d'assemblage latérale portée par chaque aile 6 du tronçon comporte un bras 11 supérieur et un bras 12 inférieur. Le bras 11 supérieur est situé au voisinage du fil de rive 3a et le bras 12 inférieur est au voisinage du fil de chaîne 3 voisin du fil de rive 3a.

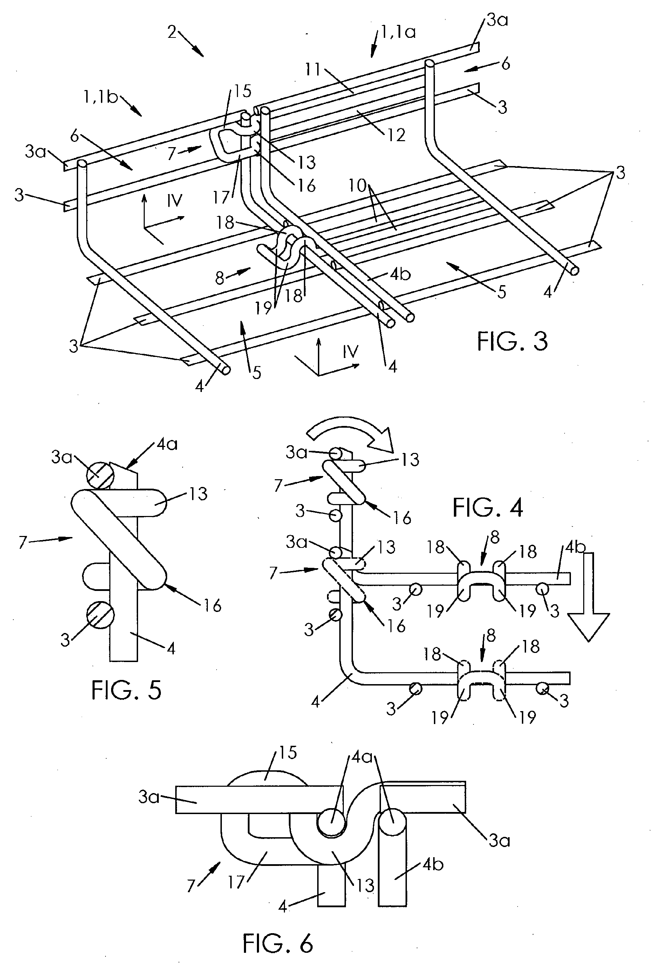

Comme visible notamment en figure 3, la boucle 9a de la pièce d'assemblage 7 latérale comprend un crochet 13 dans le prolongement du bras supérieur 11. Ce crochet 13 définit une concavité 14 tournée vers l'extérieur du tronçon 1a, cette concavité 14 étant apte à venir en prise avec un fil 4c de trame d'extrémité d'un tronçon 1b adjacent.

La boucle 9a de la pièce d'assemblage 7 comprend, dans le prolongement du crochet 13, une portion 15 rectiligne, cette portion 15 rectiligne étant sensiblement longitudinale.

Dans le prolongement du bras 12 inférieur, la boucle 9a de la pièce d'assemblage 7 latérale présente un décroché 16 s'étendant transversalement à l'aplomb du crochet 13.

Dans le prolongement de ce décroché 16, la boucle 9a comprend une portion 17 rectiligne, cette portion rectiligne 17 étant sensiblement longitudinale.

Lorsque les deux tronçons 1a, 1b sont assemblés, les deux portions rectilignes 15, 17 de la boucle 9a d'un premier tronçon 1a s'étendent, en vue de dessus, de part et d'autre des fils de chaîne 3 du deuxième tronçon 1b. Cette disposition apparaît notamment en figure 6.

Ainsi comme cela est particulièrement visible sur les figures 4 et 5, la boucle 9a des pièces 7 d'assemblage latérales est oblique, inclinée vers l'intérieur du tronçon 1.

Lorsque le tronçon 1 est vu de bout (figure 4 et 5), les pièces 7 d'assemblage latérales ont un profil en Z inversé permettant, comme il sera expliqué par la suite, de faciliter l'assemblage de deux tronçons 1a, 1 b par encliquetage transversal.

Le bras 11 supérieur des pièces 7 d'assemblage latérales est en contact avec le fil 3 de chaîne supérieur du tronçon 1 offrant ainsi une meilleure rigidité à l'assemblage. En effet, la soudure de la pièce 7 d'assemblage latérale peut être faite tout le long du bras 11 supérieur en contact avec le fil 3 de chaîne supérieur de l'aile 6 augmentant la solidité de la soudure.

De même, lorsque deux tronçons 1 sont assemblés, il n'existe pas de jeu entre la portion 15 rectiligne et le fil 3a de rive du tronçon 1b adjacent ce qui renforce la tenue mécanique du chemin 2 de câbles.

L'on décrit maintenant les pièces d'assemblage 8 fixées sur le fond 5 des tronçons 1 a, 1 b.

Les boucle de jonction 9b des pièces d'assemblage 8 se présentent, en vue de dessus, sous la forme d'une chicane comprenant une première section courbe 18 et une seconde section courbe 19.

La première section courbe 18 présente une concavité tournée vers l'extérieur du tronçon 1a, 1b, tandis que la seconde section courbe 19 présente une concavité tournée vers l'intérieur du tronçon 1a, 1b.

Afin d'apporter une meilleure rigidité structurelle aux moyens d'assemblage, l'espace entre la chicane et le fil de trame d'extrémité 4a est minimal, voir nul. Un tel agencement permet de rigidifier la boucle de jonction 9b en flexion autour d'un axe parallèle au fil de trame d'extrémité 4b, celui-ci servant de raidisseur contre lequel la première section courbe 18 prend appui.

Les deux sections courbes 18, 19 présentent de préférence un profil en arc de cercle. La première section courbe 18 présente un rayon de courbure sensiblement égal au rayon du fil de trame 4a d'extrémité de la partie extrême femelle d'un tronçon 1a, 1b.

Le fil de trame 4a d'extrémité épouse ainsi au plus près la première section courbe 18. Cette disposition permet notamment de limiter les mouvements indésirables des tronçons 1a, 1b entre eux.

De même, la deuxième section courbe 19 présente un rayon de courbure sensiblement égal, ou légèrement supérieur, au rayon du fil de trame d'extrémité 4a. Il en résulte une certaine compacité de la boucle 9b de jonction, au bénéfice de sa rigidité en flexion.

Cependant, pour des raisons de fabrication, le diamètre du fil des pièces 7, 8 d'assemblage est inférieur ou égal au diamètre du fil de trame d'extrémité 4à.

Pour former un chemin de câbles 2, l'opérateur commence par placer une extrémité d'un premier tronçon 1a munie de pièces 7, 8 d'assemblage au dessus de l'extrémité d'un tronçon 1b adjacent dépourvue de pièces 7, 8 d'assemblage. Ce positionnement est illustré sur la figure 2 et sur la figure 4 en traits pleins.

Ensuite, l'opérateur abaisse le premier tronçon 1a sur le tronçon 1b adjacent, suivant la flèche orientée vers le fond 5 du tronçon 1 de la figure 4.

La boucle 9a oblique des pièces 7 d'assemblage latérales vient alors en contact avec le fil 3a de rive des ailes 6. Sous la pression dirigée vers le fond 5 du tronçon 1 adjacent, chaque boucle 9a oblique glisse sur le fil de rive 3a des ailes 6 déformant élastiquement les ailes 6 du premier tronçon 1 en les repoussant vers l'intérieur de celui-ci - comme représenté par la flèche arrondie de la figure 4.

Une fois la base 9 oblique des pièces 7 d'assemblage latérales en dessous du fil 3 rives 3a des ailes 6 du tronçon adjacent, les ailes 6 du premier tronçon 1 reviennent à leur position d'origine, le dessus les pièces 7, 8 d'assemblage venant en prise avec le dessous des fils 3 rive du tronçon 1b adjacent et les crochets 13 venant en prise avec les fils 4 de trame du tronçon 1b adjacent. Ainsi l'encliquetage transversal est réalisé.

De plus, lorsque l'encliquetage est réalisé, les crochets 13 des pièces 8 d'assemblage centrales sont en prise avec un fil 4 de trame du tronçon 1b adjacent ce qui assure un blocage complet des tronçons 1 l'un par rapport à l'autre.

Les pièces d'assemblage 7, 8 peuvent être fabriquées distinctement de la nappe en treillis de fil ou en même temps que celle-ci.

Une fois la nappe terminée et des pièces 20 en U soudées à celle-ci, les pièces 20 en U sont pliées indépendamment de la nappe pour leur conférer leur formes de crochet 13 et/ou de décroché 16. Le résultat obtenu est le même que pour le premier cas, à savoir une nappe en treillis de fil munie de pièces 7, 8 d'assemblage.

En variante, la nappe peut recevoir des pièces 7, 8 d'assemblage préalablement formées par une machine distincte et être soudés une fois la nappe réalisée.

Une fois la nappe munie de pièces 7, 8 d'assemblage, elle peut être soit pliée pour lui conférer sa forme de tronçon 1 en U, soit stockée pour être exportée puis pliée a posteriori. Le stockage sous forme de nappe permet de faciliter le transport, les nappes requérant moins de place que les tronçons 1 en U.

Un tronçon 1 de chemin de câbles 2 comprenant les pièces d'assemblage, telles que présentées précédemment, permet d'obtenir l'un des avantages - et de préférence tous les avantages - suivants :
- simplicité et rapidité de fabrication: le tronçon 1 peut être fabriqué indépendamment des pièces 7, 8 d'assemblage, ces dernières s'adaptant à grand nombre de tronçons 1, sont alors rapportées et soudées sur les tronçons 1 rendant ainsi le processus de fabrication simple et rapide ;
- robustesse d'un chemin de câbles 2 réalisé à partir d'au moins deux tronçons 1 : les pièces 7 d'assemblage latérales viennent en contact avec le fil de rive 3a des ailes 6 empêchant les deux tronçons 1 de pivoter l'un par rapport à l'autre. De plus, les pièces 8 d'assemblage centrales permettent une meilleure répartition des efforts sur le fond de chacun des tronçons 1, évitant ainsi la concentration des efforts.
- facilité d'utilisation: l'opérateur n'a qu'un simple mouvement d'emboitement transversal à réaliser, nécessitant de positionner un premier tronçon au dessus d'un tronçon d'adjacent, d'appliquer une force vers le bas au premier tronçon de sorte que les pièces 7 d'assemblage latérales aillent coopérer avec les ailes 6 du tronçon adjacent créant ainsi une déformation élastique temporaire des ailes 6 du premier tronçon 1 qui, en reprenant leur position initiale, réalisent l'encliquetage.

## Revendications

1. Tronçon (1) de chemin de câbles (2) comprenant:
- un treillis de fil formé par assemblage de fils de chaîne (3) longitudinaux et de fils de trame (4) transversaux définissant un fond (5) et deux ailes (6) ;
- des pièces d'assemblage latérales (7) rapportées sur les ailes (6) du tronçon (1) comprenant une boucle (9) et deux bras (10) sensiblement perpendiculaires à la boucle (9) à savoir un bras (11) supérieur et un bras (12) inférieur ;
**caractérisé en ce que** :
- la pièce d'assemblage comprend un crochet (13) définissant une concavité (14) tournée vers l'extérieur du tronçon (1), ce crochet (13) étant placé dans le prolongement du bras supérieur (11);
- la boucle (9) s'étend obliquement par rapport à l'aile (6) de sorte à permettre un encliquetage transversal du tronçon (1) sur un tronçon (1) adjacent.

2. Tronçon (1) selon la revendication 1, **caractérisé en ce que** la concavité (14) est sensiblement circulaire et son rayon intérieur est sensiblement égal au rayon des fils (4) de trame du tronçon.

3. Tronçon (1) selon l'une quelconque des revendications précédentes, **caractérisé en ce que** le crochet (13) est tangent à un fil de trame d'extrémité du tronçon (1).

4. Tronçon (1) selon l'une quelconque des revendications précédentes, **caractérisé en ce que** les pièces (7) d'assemblage sont soudées sur deux fils (4) de trame du tronçon (1) par leurs bras (10).

5. Tronçon (1) selon l'une quelconque des revendications précédentes, **caractérisé en ce que** les pièces (7) d'assemblage rapportées sont formées par pliage d'un fil.

6. Chemin (2) de câbles réalisé par assemblage d'au moins deux tronçons (1) selon l'une quelconque des revendications précédentes.

## Patentansprüche

1. Teilstück (1) eines Kabeltrogs (2), das Folgendes umfasst:
- ein Fadengeflecht, das durch Zusammenfügen von longitudinalen Kettfäden (3) und von transversalen Schussfäden (4) gebildet ist und einen Boden (5) und zwei Flügel (6) definiert;
- seitliche Zusammenfügungsteile (7), die an die Flügel (6) des Teilstücks (1) angefügt sind und eine Schleife (9) und zwei zu der Schleife (9) im Wesentlichen senkrechte Arme (10), d. h. einen oberen Arm (11) und einen unteren Arm (12), umfassen;
**dadurch gekennzeichnet, dass**:
- das Zusammenfügungsteil einen Haken (13) umfasst, der eine zur äußeren Umgebung des Teilstücks (1) gewendete Konkavität (14) definiert, wobei dieser Haken (13) in der Verlängerung des oberen Arms (11) angeordnet ist;
- die Schleife (9) sich schräg in Bezug auf den Flügel (6) erstreckt, derart, dass ein transversales Einrasten des Teilstücks (1) an einem benachbarten Teilstück (1) möglich ist.

2. Teilstück (1) nach Anspruch 1, **dadurch gekennzeichnet, dass** die Konkavität (14) im Wesentlichen kreisförmig ist und ihr Innenradius im Wesentlichen gleich dem Radius der Schussfäden (4) des Teilstücks ist.

3. Teilstück (1) nach einem der vorhergehenden Ansprüche, **dadurch gekennzeichnet, dass** der Haken (13) zu einem letzten Schussfaden des Teilstücks (1) tangential ist.

4. Teilstück (1) nach einem der vorhergehenden Ansprüche, **dadurch gekennzeichnet, dass** die Zusammenfügungsteile (7) an zwei Schussfäden (4) des Teilstücks (1) über ihre Arme (10) verschweißt sind.

5. Teilstück (1) nach einem der vorhergehenden Ansprüche, **dadurch gekennzeichnet, dass** die angefügten Zusammenfügungsteile (7) durch Biegen eines Fadens gebildet sind.

6. Kabeltrog (2), der durch Zusammenfügen von wenigstens zwei Teilstücken (1) nach einem der vorhergehenden Ansprüche verwirklicht ist.

## Claims

1. Section (1) of a cable tray (2) comprising:
- a wire trellis formed by assembling longitudinal warp wires (3) and transverse weft wires (4) defining a bottom (5) and two wings (6);
- lateral assembly parts (7) attached to the sides (6) of the section (1) comprising a loop (9) and two arms (10) essentially perpendicular to the loop (9), specifically an upper arm (11) and a lower arm (12);
**characterized in that**:
- the assembly part comprises a hook (13) defining a concavity (14) oriented towards the outside of the section (1), this hook (13) being placed in the continuation of the upper arm (11);
- the loop (9) extends obliquely with respect to the wing (6) so as to allow transverse snap-fitting of the section (1) onto an adjacent section (1).

2. Section (1) according to Claim 1, **characterized in that** the concavity (14) is essentially circular and its inner radius is essentially equal to the radius of the weft wires (4) of the section.

3. Section (1) according to either one of the preceding claims, **characterized in that** the hook (13) is tangential to an end weft wire of the section (1).

4. Section (1) according to any one of the preceding claims, **characterized in that** the assembly parts (7) are welded onto two weft wires (4) of the section (1) by their arms (10).

5. Section (1) according to any one of the preceding claims, **characterized in that** the attached assembly parts (7) are formed by bending a wire.

6. Cable tray (2) created by assembling at least two sections (1) according to any one of the preceding claims.
